Europäisches Patentamt

European Patent Office

Office européen des brevets

(11) Publication number: **0 369 748 B1**

# EUROPEAN PATENT SPECIFICATION

(45) Date of publication of patent specification: **26.01.94** (51) Int. Cl.5: **B29C 47/02**

(21) Application number: **89311788.7**

(22) Date of filing: **14.11.89**

(54) **Method and apparatus for coating a substrate with a liquid resin.**

(30) Priority: **14.11.88 US 270778**

(43) Date of publication of application:
**23.05.90 Bulletin 90/21**

(45) Publication of the grant of the patent:
**26.01.94 Bulletin 94/04**

(84) Designated Contracting States:
**BE DE ES FR IT NL SE**

(56) References cited:
**FR-A- 1 590 375**
**FR-A- 2 200 109**
**FR-A- 2 310 207**
**GB-A- 1 160 043**

**PATENT ABSTRACTS OF JAPAN, vol. 4, no.
150 (M-37)[632], 22nd October 1980; & JP-
A-55 101 438 (MATSUSHITA DENKO K.K.)
02-08-1980**

**PATENT ABSTRACTS OF JAPAN, vol. 8, no.
158 (M-311)[1595], 21st July 1984; & JP-A-59
54 535 (HASHIMOTO FORMING KOGYO K.K.)
29-03-1984**

**PATENT ABSTRACTS OF JAPAN, vol. 8, no. 5
(M-267)[1442], 11th January 1984; & JP-A-58**

**168 544 (KINUGAWA GOMU KOGYO K.K.)
04-10-1984**

(73) Proprietor: **AMESBURY GROUP, INC.**
**21 Water Street**
**Amesbury Massachusetts 01903(US)**

(72) Inventor: **Mertinooke, Peter E.**
**49 Powow Street**
**Amesbury, MA 0193(US)**
Inventor: **Perry, Joseph V.**
**Wells Village Road**
**Chester, NH 03036(US)**
Inventor: **Halberstadt, Louis**
**29 Karlton Circle**
**Andover, MA 01810(US)**
Inventor: **Muessel, Dan C.**
**45 Pine Street**
**Danvers, MA 01923(US)**

(74) Representative: **Goodanew, Martin Eric et al**
**MATHISEN, MACARA & CO.**
**The Coach House**
**6-8 Swakeleys Road**
**Ickenham Uxbridge UB10 8BZ (GB)**

## Description

The present invention generally relates to a method and apparatus for coating a substrate with a liquid resin.

In many applications, it is desirable to provide a relatively thin, outer layer or skin for a substrate. Substrate as used herein will broadly refer to an underlying structure or part, both rigid and non-rigid. The substrate may include a plurality of components, some rigid and some non-rigid. The layer or skin may perform a variety of functions such as protecting the substrate from adverse external conditions, providing the external surface of the substrate or portions thereof with characteristics suitable for particular applications, providing an aesthetically appealing finished product, and the like. The outer layer or skin may also improve the tear resistance of the substrate and enhance overall strength providing a more durable and rugged finished product. A conducting wire surrounded by an insulating layer is one example of a substrate having an outer layer performing such functions. Another substrate which may include an outer layer or skin is a weatherseal. The present invention will be discussed below in terms of a weatherseal. However, the method and apparatus of the present invention are not limited in this respect. The present invention is broadly applicable where it is desired to provide an outer layer or skin for rigid and non-rigid substrates including, but not limited to, foams, metals, and extrudable plastics.

In general, weatherseals seal joints or spaces between doors and windows so as to inhibit infiltration of air, rain, snow, and other elements. Effective weatherseals can reduce both heating costs in winter and cooling costs in summer. Certain characteristics are necessary to produce an effective weatherseal. First, a weatherseal should have good compression set resistance. Compression set resistance refers to the ability of a material to resume its initial shape after being subjected to a compressive load. Failure to resume this initial shape may result in an uneven seal and reduce the effectiveness of the weatherseal. Second, a weatherseal should be soft and yielding, i.e., it should be easily compressible and conform to irregular surfaces. The gaps in doors, windows and the like in which weatherseals are utilized differ in size due to construction and a good weatherseal should have sufficient compressibility to conform to a wide range of gap sizes. Compressibility also ensures that a door or window, for example, can be closed without excessive force and still compress the weatherseal sufficiently to form the necessary seal.

The prior art discloses many materials which are utilized as weatherseals. U.S. Patent Nos. 4,328,273 and 4,185,416 disclose the use of urethane foams for a weatherseal. Commonly assigned co-pending Application Serial No. 121,805, incorporated herein by reference, discloses the use of a low density foamed thermoplastic elastomer for a weatherseal. However, these and similar materials generally have high coefficients of friction and may be easily damaged. Thus, their effectiveness and utility as a weatherseal is reduced. These problems are magnified where the weatherseal is subjected to sliding contact or other abrasive forces, as in the aforementioned U.S. patents.

In order to alleviate these problems, an outer layer or skin is typically provided for the weatherseal. The outer layer generally has a low coefficient of friction relative to the surface of contact to facilitate relative motion and is flexible to permit compression of the underlying seal. The outer layer also protects the seal from rips and tears caused by sliding contact or other abrasive forces. Low friction materials such as polyethylene copolymers, polyvinylchloride, and polypropylene copolymers have been utilized in the prior art for this outer layer.

However, there are several disadvantages associated with providing these low friction outer layers. Attaching the outer layer to the underlying seal may require a separate manufacturing step and increase the labor required to make the seal. This increases labor costs. If the outer layer is applied as a crosshead extrusion to the weatherseal, orientation of the outer layer during "draw-down" onto the seal creates low resistance to tears along the length of the seal. Thus, an initially small tear in the outer layer can propagate into a much larger tear, adversely affecting the effectiveness and utility of the weatherseal. Additionally, crosshead extrusion apparatus generally requires complex arrangements of equipment and expensive dies. These factors also increase production costs.

One prior art technique provides an outer skin for a substrate by melting a resin and placing the melted resin in a tank or pool with an entrance opening and an exit opening. The substrate is then pulled or dragged through the melted resin. The exit opening serves as a doctor blade to configure the outer layer. However, it is difficult to precisely control the thickness of the outer layer or to selectively coat portions of the substrate utilizing this prior art technique. Also, it is difficult to provide an outer layer of varying thickness. Finally, the pressure and drag exerted on a non-rigid substrate such as a foam by a viscous melted resin deforms and stretches the non-rigid substrate and generates a low quality product.

According to a first aspect of the present invention there is provided a method of applying a coating to a substrate, said method comprising the steps of introducing a resin in a liquid state at a predetermined pressure into a resin channel formed by a die plate and a face plate of a die; maintaining the liquid resin within a first pressure range in said resin channel; metering the liquid resin from said resin channel to a die opening formed in said die plate and said face plate so as to bring the liquid resin from the first pressure range to a second pressure range, the pressures in the second pressure range being generally lower than the pressures in the first pressure range; passing a substrate through said die opening; and applying the liquid resin at a pressure within the second pressure range to said substrate as said substrate passes through the die opening.

According to a second aspect of the invention there is provided an apparatus for coating a substrate, said apparatus including a die comprising a die plate; a face plate coupled to said die plate so as to define a resin channel therein for maintaining a resin in a liquid state within a first pressure range; a die opening in said die plate and said face plate for passing the substrate therethrough; a wall disposed between said resin channel and said die opening so as to form a metering gap between the top of said wall and said face plate for metering the liquid resin from said resin chanel to said die opening so as to bring the liquid resin from the first pressure range to a second pressure range to coat a substrate at the die opening, the pressures in the second pressure range being generally lower than the pressures in the first pressure range.

The present invention will now be described in relation to particular embodiments thereof by way of example and with reference to the accompanying drawings in which:

Figure 1 is a block diagram illustrating the overall operation of one embodiment of the present invention.

Figure 2 is a plan view of a die plate in accordance with one embodiment the present invention.

Figure 3 is a cross-sectional view illustrating the coating of a substrate.

Figure 4 illustrates a weatherseal formed in accordance with one embodiment the present invention.

Figure 5 is a plan view of a die plate in accordance with another embodiment of the present invention.

Figure 6 illustrates a glass run channel formed with the die plate of Figure 5.

Figure 7 is a partial block diagram illustrating the operation of another embodiment of the present invention.

Figure 8 illustrates a weatherseal formed in accordance with the embodiment of Figure 7.

Figure 9 illustrates another weatherseal formed in accordance with the embodiment of Figure 7.

Figure 10 is a plan view of a die plate in accordance with another embodiment of the present invention.

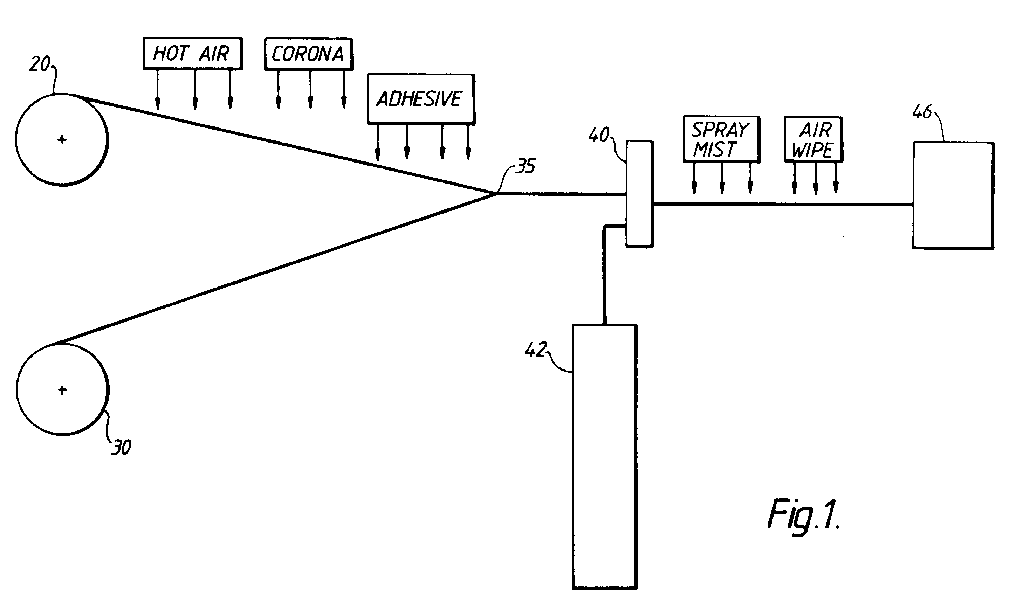

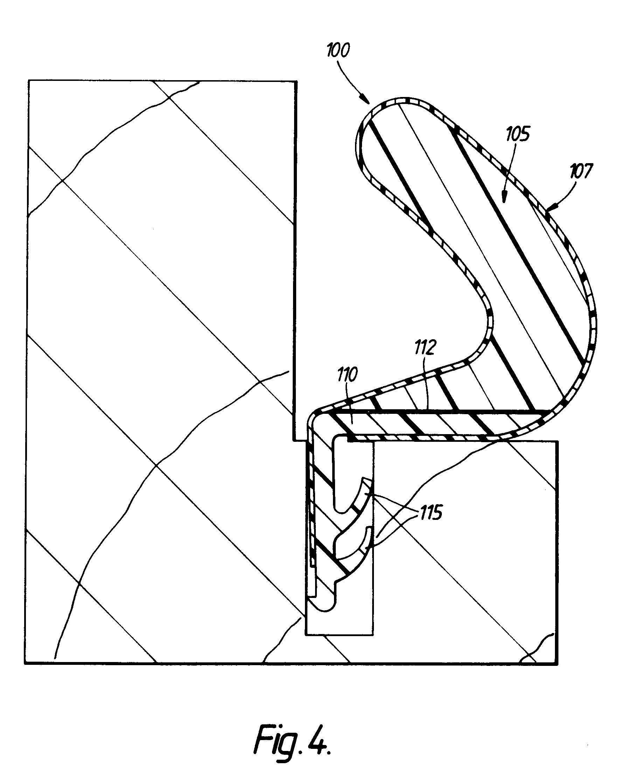

Figure 1 schematically illustrates the overall operation of the preferred embodiment of the present invention. The product produced in this process is a weatherseal of the type shown in Figure 4 which comprises a foam body with a thin skin and having bonded thereto a stiffener which is used to attach the weatherseal to a structure such as a door or window jamb. The stiffener is supplied from reel 20. The stiffener is first heated to approximately 120°-240°F by a hot air blower, for example, in order to slightly soften the stiffener and to facilitate the removal of twists or bends in the stiffener as it is uncoiled and subjected to longitudinal tension. The heating also increases the temperature of the stiffener which permits a more secure bond to be formed with the adhesive and skin material in processing steps described below.

The stiffener is then subjected to a corona treatment or other surface treatment method to enhance bonding of the adhesive to the stiffener and the skin to the stiffener. Next, an adhesive is applied to the stiffener. The adhesive may be applied by a conventional hot melt system or other methods. The adhesive should be chosen to effect secure bonding of the foam to the stiffener. It will be recognized by those skilled in the art that the adhesive utilized will depend on the materials to be bonded as well as the temperatures the resultant structure will experience during subsequent processing steps and in use as a weatherseal. In a preferred embodiment, effective bonding of low density SANTOPRENE® foam to a polypropylene stiffener is achieved with hot melts such as HYSOL® #6009, an amorphous polypropylene based hot melt, and BOSTIK® #9061, a thermoplastic rubber based pressure sensitive hot melt. SANTOPRENE® is a registered trademark of Monsanto Company. The characteristics and properties of SANTOPRENE® are disclosed in United States Patent Nos. 4,130,535 and 4,311,628, incorporated herein by reference. SANTOPRENE® is a thermoplastic elastomeric composition including blends of olefin rubber and thermoplastic olefin resin.

Foam is supplied from reel 30. The foam is preferably a low density thermoplastic elastomeric foam described in the aforementioned commonly assigned co-pending application. The foam is bonded to the stiffener to which the adhesive has been applied at a point schematically indicated at 35. In order to secure an effective bond to produce a good weatherseal, the foam should have no longitudinal tension as it is bonded to the stiffener.

The foam-stiffener combination is then pulled through die 40 where an outer layer or skin of a melted resin produced by extruder 42 is applied.

The details of the application of this outer layer or skin are discussed below. After being pulled through die 40, the resultant weatherseal is cooled by a spray mist of water, a water bath or forced air. An air wipe subsequently removes excess water from the weatherseal if necessary. The weatherseal passes through puller 46 prior to storage or packaging. Puller 46 generates the necessary force for pulling the foam-stiffener combination throughout the above-described operation. Generally, the puller should produce a line speed of about 10 to 200 feet per minute and preferably about 50 to 100 feet per minute. The optimum line speed for producing the door seal of the present embodiment is 60-75 feet per minute. It should be recognized that while the present invention will work at high line speeds, factors such as the surface area of the substrate or portions thereof which are to be coated affect the line speed and must be taken into consideration.

It is not necessary that the foam and stiffener be unwound from reels. It is possible, for example, for either the foam or stiffener or both to be extruded in line with the apparatus of the present invention. Such an arrangement requires careful control of the various line speeds but results in a single production line for the product.

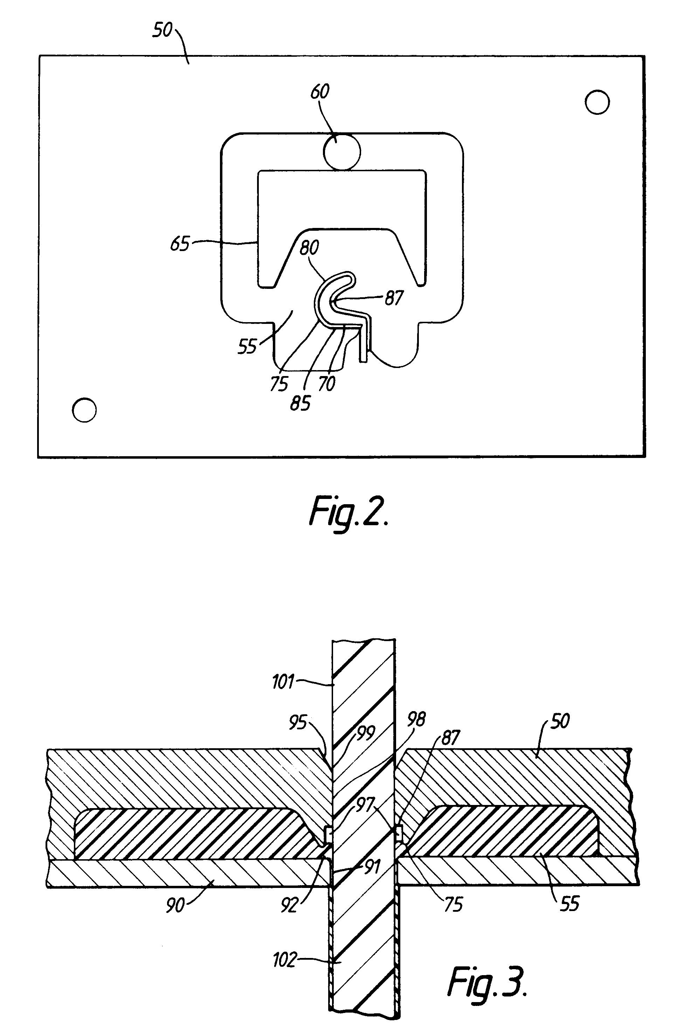

With reference to Figure 2, die plate 50 of die 40 is typically formed of metal and has a thickness ranging from 0.5 to 0.75 inches. However, these dimensions are not critical and will vary with the requirements of the particular coating process. Die plate 50 includes a resin channel 55 formed on one side thereof. Resin channel 55 has a depth of approximately 0.25 inches. As noted with respect to die thickness, this dimension is not critical and may be varied in accordance with the requirements of a particular coating process. Opening 60 is coupled to the output of extruder 42 shown in Figure 1. Opening 60 admits resin melted by extruder 42 into resin channel 55. Although the resin admitted to resin channel 55 in the present embodiment is produced by an extrusion apparatus, this is not a necessary requirement for practice of the present invention. For some materials, the application of sufficient heat will create a melt which may be forced into the die under pressure by conventional pumping techniques. The pressure is generally approximately 100 pounds per square inch (psi) and may vary between 50 and 1000 psi depending on the coating process. Some polymers, however, require both heat and shearing action to produce a melt and therefore require an extrusion apparatus. Still other resins for coating a substrate such as latex type resins are room temperature liquids and hence do not require melting and may simply be forced into resin channel 55 under pressure.

The melted resin admitted to resin channel 55 via opening 60 is divided into two streams by die portion 65. The resin within resin channel 55 is at a pressure determined by the operating conditions of extruder 42 (e.g., temperature, screw speed, temperature profile, etc.), the die configuration and the metering gap (described below). Increasing the screw speed of extruder 42, for example, increases the pressure within resin channel 55. As discussed below, the pressure within resin channel 55 controls the thickness of the layer or skin deposited on the substrate.

Die opening 70 is formed with wall portion 75 having varying heights. The illustrated die opening is configured to produce the door or window seal of Figure 4. It will be recognized that die opening 70 may be configured to coat substrates of any shape in accordance with the discussion below. As detailed below, the height of wall portion 75 varies in accordance with the position of the wall portion in resin channel 55 and the thickness of the outer layer or skin desired on the substrate at that point. Die plate 50 cooperates with a face or scraper plate 90 having an opening 91 therein corresponding to die opening 70 and which is secured thereto in a manner to enclose resin channel 55 as shown in Figure 3. The gaps between face plate 90 and wall portion 75 form metering gap 92 for the resin.

The pressure within resin channel 55 is a function of position therein and generally decreases with increasing distance from opening 60 so as to generate a range of pressures within channel 55. Therefore, in order to provide a layer of uniform thickness to a substrate, the height of wall portion 75 must be varied such that the size of metering gap 92 is correlated with the pressure at that point to generate a uniform resin flow onto all portions of the substrate. For example, the height of the wall portion at point 80 should be greater than the height of the wall portion at point 85 since the pressure on the resin at point 80 is greater than the pressure on the resin at point 85. The decreased wall portion height at point 85 forms a larger metering gap and permits a greater volume of melted resin to flow between face plate 90 and the wall portion to compensate for the reduced pressure and the flow characteristics of the material being applied.

The size of metering gap 92 varies between 0.00 to .2 inches in a preferred embodiment for the door seal. The size of the metering gap will vary depending on the particular coating operation. The size of the metering gap at various portions of the resin channel may be varied to provide a uniformly thick skin or to provide a skin whose thickness varies depending on position. The ability to provide a skin of varying thickness is a distinct advantage over prior art techniques of pulling a substrate through a pool of melted resin. In such prior art techniques, the thickness of the skin is not easily controlled nor may different portions of the substrate be coated with different thicknesses.

Ridge 87 illustrated in Figure 3 is formed on the inner side of wall portion 75. Ridge 87 is spaced approximately 0.050 inch below the top of the adjacent wall portion and is approximately 0.030 inch wide in the preferred embodiment. The 0.050 inch spacing is not critical. Generally, the spacing should be sufficient to provide a pocket 97 of reduced pressures as compared with the first range of pressures within resin channel 55. Pocket 97 is thus maintained within a second pressure range, the pressures in the second pressure range being lower than pressures in the range of pressures in resin channel 55. The pressures in the second pressure range are generally about atmospheric pressure. Ridge 87 further forms a shoulder which prevents wall portion 75 from contacting substrate 101 as it is pulled through the die. It has been determined that if wall portion 75 contacts substrate 101, a uniform skin is not obtained and a product of low quality is produced. Ridge 87 permits the resin from resin channel 55 to flow through metering gap 92 into pocket 97 at a lower pressure from where it subsequently flows onto substrate 101 being pulled through die opening 70. Thus, a low pressure thin stream of resin flows into pocket 97. Although the resin is at high pressure in resin channel 55, ridge 87 forms a low pressure region or pocket 97 for applying the resin to substrate 101. The application of the resin at approximately atmospheric pressure is important to the production of a uniform skin.

Face plate 90 is secured to die plate 50 by screws for example (not shown). Substrate 101 enters the die through tapered lead 95. Tapered lead 95 ends in a contact surface or shoulder 99. Shoulder 99 and surface 98 serve to position the substrate 101 in the die opening and further prevent the resin from travelling back away from face or scraper plate 90. The resin coated on to the substrate is doctored by face plate 90 made of metal with the door seal profile cut therein to produce outer layer 102. Thus, a low pressure, thin stream of resin is forced into pocket 97 from all sides and as it contacts the substrate, it is doctored.

The thickness of the skin applied to a substrate generally depends on the line speed, the flow speed of the resin, and the doctoring by the face plate. However, assuming constant line speed, the coating of rigid and non-rigid substrates seems to have slightly different mechanisms. The thickness of the skin on a non-rigid substrate such as foam appears to be determined by the metering gap and the pressure in the resin channel. As more material is forced through the metering gap, the non-rigid substrate is defected or compressed more and a thicker skin is produced. If not as much material is forced through the metering gap, the non-rigid substrate is deflected or compressed less and a thinner skin is produced. The face plate does not appear to play a critical role in determining the skin thickness for non-rigid substrates or non-rigid portions of substrates. However, there is much less deflection with a rigid substrate and the face plate plays a more important role in determining thickness by scraping or doctoring the applied resin. In the die configuration of the above-described embodiment, the rigid portion of the door seal passes through the die opening at a point remote from opening 60, and consequently, the resin is at a relatively low pressure. It is important to ensure that sufficient material is supplied to provide a skin for the rigid portion. A flow channel may be cut into the face plate to increase the resin flow at that point.

Utilizing the present invention, it is also possible to coat only selected portions of a substrate by providing no metering gap at particular points in resin channel 55. That is, at particular points the top of wall portion 75 abuts face plate 90 and no resin flows though. This is particularly important in applications such as weatherseals where portions of the seal perform functions adversely affected by the application of a skin. The door seal of Figure 4 depicts such a situation. Door seal 100 includes foam profile 105 and stiffener or attachment device 110. An adhesive layer 112 bonds foam profile 105 to stiffener 110. Stiffener 110 includes barbs 115 which secure door seal 100 in a jamb or the like. As noted above, skin 107 should have a low coefficient of friction in order to facilitate the opening and closing of a door. However, this low friction skin 107 should not cover barbs 115 so that the seal can be effectively secured to the door jamb. A low friction layer covering barbs 115 would inhibit their ability to maintain a secure attachment. Such selective application of a skin can not be obtained by pulling or dragging the door seal through a pool of melted resin.

Successful implementation of the present invention requires careful attention to the compatibility of materials, i.e., a good bond must be formed between the skin and the substrate. In general, the applied resin must also be sufficiently hot to form a thermal bond with those portions of the substrate to be coated. In the preferred embodiment, the SANTOPRENE® foam and polypropylene stiffener are coated with a non-foamed SANTOPRENE®-blend skin. The SANTOPRENE® blend preferably consists of 750 parts of SANTOPRENE® 221-64, 250 parts of SANTOPRENE® 223-50, 50 parts Ampacet #10061 (a slip additive), and 80 parts of a color concentrate. The numerical designation following "SANTOPRENE®" is a commercial product code which defines certain characteristics of the SANTOPRENE® grade. The SANTOPRENE® blend is extruded from a single screw extruder. The temperature of the melted SANTOPRENE® blend should be approximately 480°F to form a thermal bond with the stiffener and the foam. The SANTOPRENE®-blend skin has a relatively low coefficient of friction, is soft and compliant, has good strength and has a good resistance to compression set. The SANTOPRENE®-blend skin also achieves a good thermal bond with the SANTOPRENE® foam and the polypropylene stiffener.

The above-described method may be utilized with resins having a wide range of viscosities. Suitable skin materials for appropriate rigid and non-rigid substrates (or combinations of the two) include thermoplastic polymers such as olefinic plastic/olefinic rubber blends, fully cross-linked rubber versions of the above including SANTOPRENE®, polyethylene, ethylene/methacrylic acid copolymer, ethylene/ethyl acrylate polymer, linear low density polyethylene polymers and copolymerizations therewith, ethylene interpolymer/chlorinated polyolefin blends, ionomers (SURLYN®), polypropylene and polypropylene copolymers, nylon, polyesters, and thermoplastic polyurethane and mixtures thereof. SURLYN® is a registered trademark of DuPont. As noted above, room temperature liquid resins such as latex emulsions compounded from silicones, acrylics, polyurethanes, and natural or synthetic rubbers may also be used.

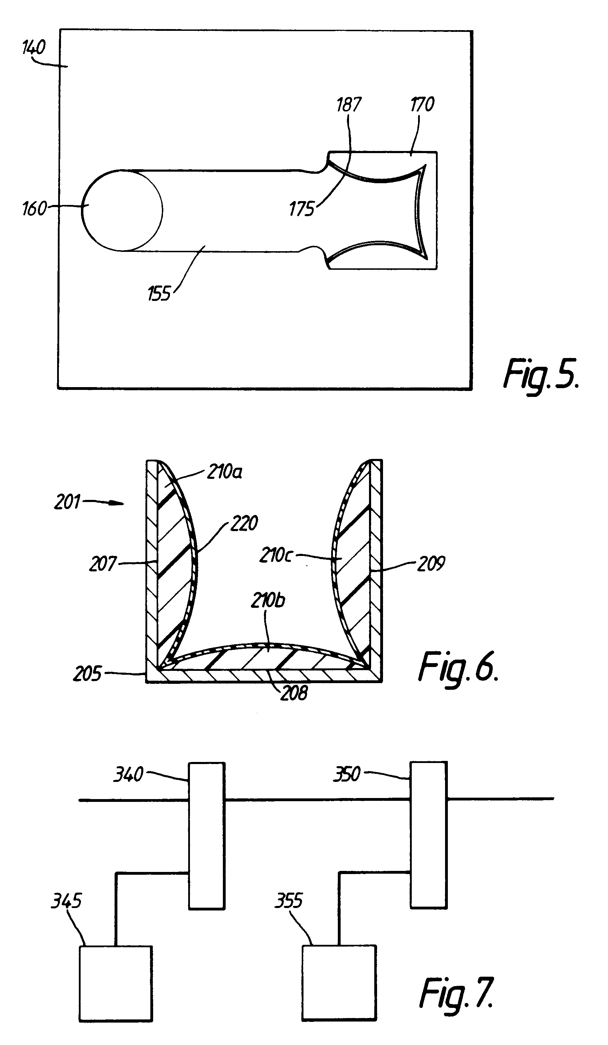

Another embodiment of the present invention is illustrated in Figures 5 and 6. Figure 5 illustrates a die plate generally indicated at 140. Die plate 140 includes resin channel 155 formed on one side thereof and opening 160. Die opening 170 is formed with wall portions 175 having varying heights and having ridge 187 formed on the inner surface thereof. The die portion illustrated in Figure 5 is configured so as to produce the glass run channel 201 of Figure 6. Glass run channel 201 includes a roll-formed metal channel 205 having semi-cylindrical foam portions 210a, 210b, 210c adhesively secured to inner walls 207, 208, 209 respectively.

In order to coat the surfaces of foam portions 210a, 210b, 210c with outer layer 220, glass run channel 201 is pulled through the channel of die opening 170. Resin is forced by pressure in resin channel 155 through metering gaps formed by wall portions 175 and a corresponding face plate (not shown) in a manner similar to that discussed with respect to the above described embodiment.

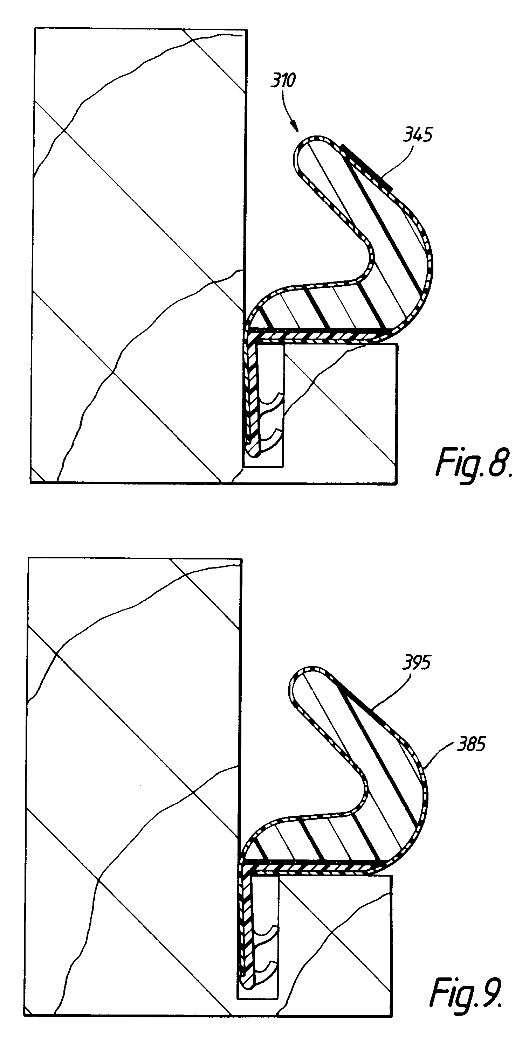

The present invention may also be utilized to provide multiple outer layers to a substrate. Thus, with reference to Figure 7, a substrate such as the foam-stiffener combination described above may be pulled through die 340 having liquid resin supply 345 and be coated with a first outer layer. If it were desired, for example, to provide strips of a lower friction material over the first outer layer in order to produce a low friction contact surface, the foam-stiffener combination with the first outer layer could be pulled through second die 350 having liquid resin supply 355. This would generate the low friction strip 345 on weatherseal 310 as illustrated in Figure 8. For example, the first die may apply a skin utilizing the above-referenced SANTOPRENE® blend while the second die may apply a latex skin as a low friction overcoat. The heat from SANTOPRENE® cures or dries the latex. Alternatively, the second die may pump a slurry of water and micronized polyethylene or teflon powder or silicone powder or other low friction material onto the hot SANTOPRENE®. It will be apparent that this second layer may cover all or any portion of the first layer in accordance with the desired final product. It will be apparent that any number of layers may be provided.

Still another embodiment of the method of the present invention may utilize the multiple die arrangement of Figure 7. A substrate such as the foam-stiffener combination described above may be pulled through die 340 and be coated with a first outer layer covering only a selected portion thereof. The resultant combination could then be pulled through die 350 and portions of the substrate not covered by the first layer could be coated with a second layer coextensive with the first layer. Thus, as shown in Figure 9, a low friction strip 395 may be provided directly on a selected portion of the substrate with the remainder of the coated portions of the substrate covered with a layer 385 of different material.

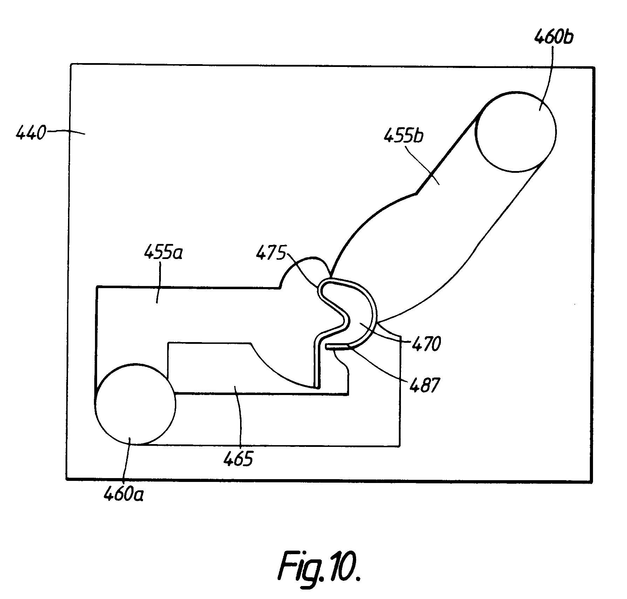

Figure 10 illustrates a die plate in accordance with another embodiment of the present invention. Die plate 440 may be utilized to provide a dual extruded skin. Die plate 440 includes resin channels 455a and 455b containing first and second different resins, respectively, for coating a substrate pulled through die opening 470. The first resin is admitted to resin channel 455a through opening 460a and the second resin is admitted to resin channel 455b through opening 460b. The resin in resin channel 455a is divided into two streams by die portion 465. Resin channels 455a and 455b are formed such that there is no mixture of the first and second resins in the channels. The first and second resins are metered between wail portion 475 and a face plate (not shown) into a low pressure pocket formed by ridge 487 from where they are applied to the substrate. The embodiment of Figure 10 may be used to produce the weatherseal shown in Figure 9.

In each of these alternative embodiments, as with the preferred embodiment, careful attention must be paid to the choice of materials in order to secure effective bonding.

An important advantage of the present invention is that a less oriented skin is produced, i.e., the skin molecules are not aligned to the same degree as they would be in a crosshead extrusion. The low orientation produces a skin which is strong and rubbery. The skin has uniform strength in all directions and does not propagate lengthwise tears. The skin is less oriented since it is not drawn-down onto the substrate as in a typical crosshead die. The skin becomes oriented during draw down. However, in the present invention, the skin is applied in liquid form and only limited orientation occurs as the substrate passes through the scraper or face plate.

In addition, a high pressure die, because of the high pressures and the resulting flow rates, requires very careful channelling to ensure that the pressures are balanced. The intricate channelling and the requirement of withstanding high pressures require delicate machining and generally increase production costs. The die of the present invention is utilized in a relatively low pressure system which tends to balance its own pressures and does not require intricate channelling. Low pressure regions in the die of the present invention may be easily compensated for by reducing the height of the wall portions. Dies of this type are easier to make and are significantly less expensive than conventional crosshead dies.

Example I

SANTOPRENE® having a durometer reading of 64 was foamed in accordance with the method detailed in the aforementioned commonly assigned co-pending application. A stiffener of polypropylene was bonded to the foam profile as shown in Figure 1. A blend of 750 parts SANTOPRENE® 221-64, 250 parts SANTOPRENE® 223-50, 50 parts Ampacet #10061, and 80 parts of a color additive was melted in a $1\frac{1}{4}$ " extruder operated at 95 revolutions per minute and fed into a die of the type shown in Figures 2 and 3 with the die at 480°F. The foam-stiffener combination was pulled through the die at 50 feet per minute and subsequently cooled.

The invention has been described in detail in connection with the preferred embodiments. These embodiments, however, are merely for example only and the invention is not limited thereto. It will be appreciated by those skilled in the art that other variations and modifications can be easily made within the scope of the invention as defined by the appended claims.

Thus it will be appreciated by those skilled in the art that the foregoing embodiments of the present invention provide a method and apparatus for coating a substrate which is simple and relatively low in cost as well as providing a method and apparatus for coating a substrate which produces a less orientated outer layer.

It will also be appreciated that the described embodiments of the present invention provide a method and apparatus for producing a substrate having a multiple-component outer layer, that the outer layer may be of uniform or varying thickness and may be selectively applied to portions of the substrate.

## Claims

1. A method of applying a coating to a substrate (101;201), said method comprising the steps of introducing a resin in a liquid state at a predetermined pressure into a resin channel (55;155;455) formed by a die plate (50;140;440) and a face plate (90) of a die (40;340;350); maintaining the liquid resin within a first pressure range in said resin channel (55;155;455); metering the liquid resin from said resin channel (55;155;455) to a die opening (70;170;470) formed in said die plate (50;140;440) and said face plate (90) so as to bring the liquid resin from the first pressure range to a second pressure range, the pressures in the second pressure range being lower than the pressures in the first pressure range; passing a substrate (101;201) through said die opening (70;170;470); and applying the liquid resin at a pressure within the second pressure range to said substrate (101; 201) as said substrate passes through the die opening (70;170;470).

2. A method in accordance with claim 1, wherein the substrate (101;201) is pulled through said die opening (70;170;470) at a predetermined rate and the flow of the liquid resin from said resin channel (55;155;455) to said die opening (70;170;470) is controlled so as to coat only predetermined portions of the substrate (101;201).

3. A method in accordance with claim 2, wherein the liquid resin is metered from said resin channel (55;155;455) to said die opening (70;170;470) so as to coat said predetermined portions of the substrate (101;201) with a uniform thickness of said liquid resin.

4. A method in accordance with claim 2, wherein the liquid resin is metered from said resin channel (55;155;455) to said die opening (70;170;470) so as to coat said predetermined portions of the substrate with varying thicknesses of said liquid resin.

5. A method in accordance with any preceding claim, wherein the pressures within the second pressure range are approximately atmospheric pressure.

6. A method in accordance with any preceding claim, wherein the liquid resin is applied to said substrate (101;201) so as to produce an outer layer having low orientation.

7. A method in accordance with any preceding claim, wherein the liquid resin coated substrate is doctored to configure an outer layer for said substrate.

8. A method according to claim 1 and for providing an outer layer comprising at least a first and a second component of different materials, the method comprising the steps of:
    applying a first resin in a liquid state to at least a first selected portion of said substrate (201) utilizing said die (340);
    doctoring the first liquid resin coated substrate to configure a first outer layer component at said at least first selected portion of said substrate;
    applying a second resin in a liquid state to at least a second selected portion of said substrate (201) utilizing a second die (350) which brings the second liquid resin from a third pressure range to a fourth pressure range, the pressures in the fourth pressure range being lower than the pressures in the third pressure range, said second liquid resin applied to said substrate (201) at a pressure within said fourth pressure range; and
    doctoring the second liquid coated substrate to configure a second outer layer component at said at least second selected portion of said substrate.

9. A method according to claim 8, wherein said second portion of the substrate in distinct from said first portion.

10. A method in accordance with any preceding claim, wherein said substrate comprises, at least in part, a non-rigid portion.

11. A method in accordance with claim 10, wherein said non-rigid portion comprises a foam and the remainder of said substrate comprises a rigid portion formed of polypropylene.

12. A method in accordance with any preceding claim, wherein said resin or at least one of said first or second resins comprises a latex emulsion or at least one melted thermoplastic resin selected from the group consisting of ethylene/methacrylic acid copolymer, ethylene/ethyl acrylate polymer, linear low density polyethylene polymers and copolymerizations therewith, ethylene interpolymer/chlorinated polyolefin blends, ionomers, polypropylene copolymers, polyethylene copolymers, nylon, polyesters, and polyurethane.

13. A method in accordance with any of claims 8 to 12, wherein at least one of said first and second outer layer components comprises a low friction layer.

14. A method according to any one of claims 1 to 13 wherein said substrate comprises a thermoplastic elastomeric foam.

15. An apparatus for coating a substrate, said apparatus including a die comprising:
    a die plate (50;140;440);
    a face plate (90) coupled to said die plate (50;140;440) so as to define a resin channel (55;155;455) therein for maintaining a resin in a liquid state within a first pressure range;
    a die opening (70;170;470) in said die plate and said face plate for passing the substrate (101;201) therethrough;
    a wall (75) disposed between said resin channel (55;155;455) and said die opening so as to form a metering gap (92) between the top of said wall (75) and said face plate (90) for metering the liquid resin from said resin chanel to said die opening so as to bring the liquid resin from the first pressure range to a second pressure range to coat a substrate (101;201) at the die opening (70;170;470), the Pressures in the second pressure range being lower than the pressures in the first pressure range.

16. An apparatus in accordance with claim 15, wherein said metering gap (92) controls the flow of liquid resin so as to coat only predetermined portions of said substrate (101;201) and to coat said portions with either a uniform thickness of said liquid resin or varying thicknesses as desired.

17. An apparatus according to claim 15 or claim 16 for providing an outer layer comprising at least a first and a second component of different materials, said apparatus including a second die (350) supplied with a second liquid resin, the second die (340;350) comprising a first region, means for admitting a resin in the liquid state to said first region, means for maintaining said first region within a first pressure range, a second region, control means for controlling the flow of the liquid resin from said first region to said second region so as to bring the liquid resin from the first pressure range to a second pressure range, the pressures in the second pressure range being lower than the pressures in the first pressure range, and a die opening adjacent said second region for applying said liquid resin at a pressure within the second pressure range to the substrate (201), said first-mentioned die applying said first liquid resin to at least a first selected portion of said substrate, said second die applying said second liquid resin to at least a second selected portion of said substrate (201).

18. An apparatus in accordance with claim 17, wherein said first and second dies are arranged such that said first and said second selected portions at least partially overlap.

19. An apparatus according to claim 15, wherein the face plate defines first and second resin channels (455a,455b) therein for containing respective first and second resins in a liquid state said wall (475) being disposed between said first and second resin channels (455a,455b) and said die opening so as to form a metering gap between a top of said wall and said face plate for metering the flow of the first and second liquid resins from said first and second resin channels to said die opening so as to coat a substrate in said die opening with the first and second liquid resins.

**Patentansprüche**

1. Verfahren zum Auftragen einer Beschichtung auf ein Substrat (101;201), wobei das Verfahren die Schritte des Einleitens eines Harzes in einem flüssigen Zustand bei einem vorgegebenen Druck in einen Harzkanal (55;155;455), der durch eine Düsenplatte (50;140;440) und eine Frontplatte (90) einer Düse (40;340;350) gebildet wird, umfaßt; des Haltens des flüssigen Harzes in einem ersten Druckbereich in dem Harzkanal (55;155;455); des dosierten Leitens des flüssigen Harzes aus dem Harzkanal (55;155;455) zu einer Düsenöffnung (70;170;470), die in der Düsenplatte (50;140;440) und der Frontplatte (90) ausgeformt ist, um das flüssige Harz aus dem ersten Druckbereich in einen zweiten Druckbereich zu bringen, wobei die Drücke im zweiten Druckbereich niedriger sind als die Drücke im ersten Druckbereich; des Führens eines Substrates (101;201) durch die Düsenöffnung (70;170;470); und des Auftragens des flüssigen Harzes bei einem Druck im zweiten Druckbereich auf das Substrat (101;201), wenn das Substrat die Düsenöffnung (70;170;470) durchläuft.

2. Verfahren nach Anspruch 1, wobei das Substrat (101;201) mit einer vorgegebenen Geschwindigkeit durch die Düsenöffnung (70;170;470) gezogen wird, und der Fluß des flüssigen Harzes aus dem Harzkanal (55;155;455) zur Düsenöffnung (70;170;470) so gesteuert wird, daß nur vorgegebene Abschnitte des Substrates (101;201) beschichtet werden.

3. Verfahren nach Anspruch 2, wobei das flüssige Harz dosiert aus dem Harzkanal (55;155;455) zur Düsenöffnung (70;170;470) geleitet wird, so daß die vorgegebenen Abschnitte des Substrates (101;201) mit einer gleichmäßigen Dikke des flüssigen Harzes beschichtet werden.

4. Verfahren nach Anspruch 2, wobei das flüssige Harz dosiert aus dem Harzkanal (55;155;455) zur Düsenöffnung (70;170;470) geleitet wird, so daß die vorgegebenen Abschnitte des Substrates mit unterschiedlichen Dicken des flüssigen Harzes beschichtet werden.

5. Verfahren nach einem der vorangehenden Ansprüche, wobei die Drücke im zweiten Druckbereich ungefähr atmosphärischem Druck entsprechen.

6. Verfahren nach einem der vorangehenden Ansprüche, wobei das flüssige Harz auf das Substrat (101;201) aufgetragen wird, um eine äußere Schicht mit geringer Ausrichtung zu erzeugen.

7. Verfahren nach einem der vorangehenden Ansprüche, wobei das mit flüssigem Harz beschichtete Substrat abgestreift wird, um eine äußere Schicht für das Substrat zu formen.

8. Verfahren noch Anspruch 1 und zur Herstellung einer äußeren Schicht, die wenigstens einen ersten und einen zweiten Bestandteil aus verschiedenen Materialien umfaßt, wobei das Verfahren die folgenden Schritte umfaßt:
Auftragen eines ersten Harzes in einem flüssigen Zustand auf wenigstens einen ersten ausgewählten Abschnitt des Substrates (201) unter Verwendung der Düse (340);

Abstreifen des ersten mit flüssigem Harz beschichteten Substrates zur Formung eines ersten äußeren Schichtbestandteils auf dem wenigstens ersten ausgewählten Abschnitt das Substrates;

Auftragen eines zweiten Harzes in einem flüssigen Zustand auf wenigstens einen zweiten ausgewählten Abschnitt des Substrates (201) unter Verwendung einer zweiten Düse (350), die das zweite flüssige Harz aus einem dritten Druckbereich in einen vierten Druckbereich bringt, wobei die Drücke im vierten Druckbereich niedriger sind als die Drücke im dritten Druckbereich, wobei das zweite flüssige Harz bei einem Druck im vierten Druckbereich auf das Substrat (201) aufgetragen wird; und

Abstreifen des zweiten mit Flüssigkeit beschichteten Substrates zur Formung eines zweiten äußeren Schichtbestandteils auf dem wenigstens zweiten ausgewählten Abschnitt des Substrates.

9. Verfahren nach Anspruch 8, wobei der zweite Abschnitt des Substrates vom ersten Abschnitt getrennt ist.

10. Verfahren nach einem der vorangehenden Ansprüche, wobei das Substrat wenigstens teilweise einen nichtstarren Abschnitt umfaßt.

11. Verfahren nach Anspruch 10, wobei der nichtstarre Abschnitt einen Schaumstoff umfaßt und der Rost des Substrates einen aus Polypropylen bestehenden starren Abschnitt umfaßt.

12. Verfahren nach einem der vorangehenden Ansprüche, wobei das Harz oder wenigstens das erste oder das zweite Harz eine Latexemulsion umfaßt oder wenigstens ein geschmolzenes thermoplastisches Harz, das aus der Gruppe ausgewählt wird, die aus Ethylen-Methacrylsäure-Copolymer, Ethylen-Ethylacrylat-Polymer, Polymeren und Copolymeren von linearem Polyethylen niedriger Dichte, Mischungen aus Ethylenpolymer und Chlorpolyolefin, Ionomeren, Polypropylen-Copolymeren, Polyethylen-Copolymeren, Nylon, Polyestern und Polyurethan besteht.

13. Verfahren nach einem der Ansprüche 8 bis 12, wobei wenigstens der erste oder der zweite äußere Schichtbestandteil eine Schicht geringer Reibung umfaßt.

14. Verfahren nach einem der Ansprüche 1 bis 13, wobei das Substrat einen thermoplastischen Elastomerschaumstoff umfaßt.

15. Vorrichtung zur Beschichtung eines Substrates, wobei die eine Düse enthaltende Vorrichtung umfaßt:

eine Düsenplatte (50;140;440);

eine Frontplatte (90), die mit der Düsenplatte (50;140;440) so verbunden ist, daß sie einen Harzkanal (55;155;455) darin bildet, um ein Harz in einem flüssigen Zustand in einem ersten Druckbereich zu halten;

eine Düsenöffnung (70;170;470) in der Düsenplatte und der Frontplatte zum Leiten des Substrates (101;201) durch selbige;

eine Wand (75), die zwischen dem Harzkanal (55;155;455) und der Düsenöffnung angeordnet ist und einen Dosierspalt (92) zwischen der Oberseite der Wand (75) und der Frontplatte (90) zur dosierten Leitung des flüssigen Harzes aus dem Harzkanal zur Düsenöffnung bildet, um so das flüssige Harz aus dem ersten Druckbereich in einen zweiten Druckbereich zu bringen und ein Substrat (101;201) an der Düsenöffnung (90;170;470) zu beschichten, wobei die Drücke im zweiten Druckbereich niedriger sind als die Drücke im ersten Druckbereich.

16. Vorrichtung nach Anspruch 15, wobei der Dosierspalt (92) den Fluß von flüssigem Harz so steuert, daß nur vorgegebene Abschnitte des Substrates (101;201) beschichtet werden und die Abschnitte, je nach Wunsch, entweder mit einer einheitlichen Dicke des flüssigen Harzes oder mit unterschiedlichen Dicken beschichtet werden.

17. Vorrichtung nach Anspruch 15 oder Anspruch 16 zur Herstellung einer äußeren Schicht, die wenigstens einen ersten und einen zweiten Bestandteil aus verschiedenen Materialien umfaßt, wobei die Vorrichtung eine zweite Düse (350) enthält, der ein zweites flüssiges Harz zugeführt wird, wobei die zweite Düse (340;350) einen ersten Bereich umfaßt, eine Einrichtung zum Einlassen eines Harzes in dem flüssigen Zustand in den ersten Bereich, eine Einrichtung zum Halten des ersten Bereiches in einem ersten Druckbereich, einen zweiten Bereich, eine Steuereinrichtung zum Steuern des Flusses des flüssigen Harzes aus dem ersten Bereich in den zweiten Bereich, um so das flüssige Harz aus dem ersten Druckbereich in einen zweiten Druckbereich zu bringen, wobei die Drücke im zweiten Druckbereich niedriger sind als die Drücke im ersten Druckbereich, sowie eine Düsenöffnung, die an den zweiten Bereich angrenzt, zum Auftragen das flüssigen Harzes auf das Substrat bei einem Druck im zweiten Druckbereich (201), wobei erstgenannte Düse das erste flüssige Harz auf wenigstens einen ersten ausgewählten Abschnitt des Substrates aufträgt, die zweite Düse das zweite flüssige Harz auf wenigstens einen zweiten ausgewählten Abschnitt des Substrates (201) aufträgt.

18. Vorrichtung nach Anspruch 17, wobei die erste und die zweite Düse so angeordnet sind, daß der erste und der zweite ausgewählte Bereich einander wenigstens teilweise überlagern.

19. Vorrichtung nach Anspruch 15, wobei die Frontplatte einen ersten und einen zweiten Harzkanal (455a,455b) darin begrenzt, die das erste bzw. das zweite Harz in einem flüssigen Zustand enthalten, wobei die Wand (475) zwischen dem ersten und dem zweiten Harzkanal (455a,455b) und der Düsenöffnung angeordnet ist, und so einen Dosierspalt zwischen einer Oberseite der Wand und der Frontplatte zum dosierten Leiten des Flusses des ersten und des zweiten flüssigen Harzes aus dem ersten und dem zweiten Harzkanal zu der Düsenöffnung bildet, um so ein Substrat in der Düsenöffnung mit dem ersten und dem zweiten flüssigen Harz zu beschichten.

**Revendications**

1. Procédé pour appliquer un revêtement sur un substrat (101; 201), ledit procédé comprenant les étapes consistant à introduire une résine à l'état liquide à une pression prédéterminée dans un canal à résine (55; 155; 455) formé par une plaque de matrice (50; 140; 440) et une plaque frontale (90) d'une matrice (40; 340; 350), à maintenir ladite résine liquide dans une première plage de pression dans ledit canal à résine (55; 155; 455), à distribuer de manière mesurée la résine liquide depuis ledit canal à résine (55; 155; 455) jusqu'à une ouverture de matrice (70; 170; 470) formée dans ladite plaque de matrice (50; 140; 440) et ladite plaque frontale (90) de manière à amener la résine liquide de ladite première plage de pression dans une seconde plage de pression, les pressions de la seconde plage de pression étaient inférieures aux pressions de la première plage de pression, à faire passer un substrat (101; 201) à travers ladite ouverture de matrice (70; 170; 470), et à appliquer la résine liquide à une pression située dans la seconde plage de pression audit substrat (101 ; 201) lorsque ledit substrat traverse l'ouverture de matrice (70; 170 ; 470).

2. Procédé selon la revendication 1, dans lequel le substrat (101 ; 201) est tiré dans ladite ouverture de matrice (70 ; 170 ; 470) à une vitesse prédéterminée et l'écoulement de la résine liquide depuis ledit canal à résine (55; 155; 455) jusqu'à ladite ouverture de matrice (70; 170; 470) est commandé de manière à ne revêtir que des parties prédéterminées du substrat (101 ; 201).

3. Procédé selon la revendication 2, dans lequel la résine liquide est distribuée de manière mesurée depuis ledit canal à résine (55; 155; 455) jusqu'à ladite ouverture de matrice (70 ; 170 ; 470) de manière à recouvrir lesdites parties prédéterminées du substrat (101; 201) d'une épaisseur uniforme de ladite résine liquide.

4. Procédé selon la revendication 2, dans lequel la résine liquide est distribuée de manière mesurée depuis ledit canal à résine (55; 155; 455) jusqu'à ladite ouverture de matrice (70; 170; 470) de manière a recouvrir lesdites parties prédéterminées du substrat d'épaisseurs variables de ladite résine liquide.

5. Procédé selon l'une quelconque des revendications précédentes, dans lequel les pressions de ladite seconde plage de pression sont sensiblement égales à la pression atmosphérique.

6. Procédé selon l'une quelconque des revendications précédentes, dans lequel la résine liquide est appliquée audit substrat (101; 201) de manière à former une couche externe présentant une faible orientation.

7. Procédé selon l'une quelconque des revendications précédentes, dans lequel le substrat revêtu de résine liquide est râclé pour configurer une couche externe pour ledit substrat.

8. Procédé selon la revendication 1 et pour former une couche externe comprenant au moins un premier composant et un second composant en matériaux différents, le procédé comprenant les étapes consistant à :
   appliquer une première résine à l'état liquide sur au moins une première partie choisie dudit substrat (201) au moyen de ladite matrice (340);
   râcler le substrat revêtu de la première résine liquide pour configurer un premier composant de couche externe au niveau de ladite ou desdites premières parties choisies dudit substrat;
   appliquer une seconde résine à l'état liquide sur au moins une seconde partie choisie dudit substrat (201) au moyen d'une seconde matrice (350) qui fait passer la seconde résine liquide d'une troisième plage de pression à une quatrième plage de pression, les pressions de la quatrième plage de pression étant inférieures aux pressions de la troisième plage de pression, ladite seconde résine liquide étant appliquée audit substrat (201) à une pression située dans ladite quatrième plage de pression ; et à

râcler le substrat revêtu de la seconde résine liquide pour configurer un second composant de couche externe au niveau de ladite ou desdites secondes parties choisies dudit substrat.

9. Procédé selon la revendication 8, dans lequel ladite seconde partie du substrat est différente de ladite première partie.

10. Procédé selon l'une quelconque des revendications précédentes, dans lequel ledit substrat comprend, au moins en partie, une partie non rigide.

11. Procédé selon la revendication 10, dans lequel ladite partie non rigide comprend une mousse et le reste dudit substrat comprend une partie rigide formée de polypropylène.

12. Procédé selon l'une quelconque des revendications précédentes, dans lequel ladite résine ou au moins l'une desdites première ou seconde résines comprend une émulsion de latex ou au moins une résine thermoplastique fondue choisie dans le groupe formé par un copolymère éthylène/acide méthacrylique, un polymère éthylène/acrylate d'éthyle, des polymères et copolymères de polyéthylène linéaire basse densité, des mélanges d'interpolymères d'éthylène et de polyoléfines chlorées, des ionomères, des copolymères du polypropylène, des copolymères du polyéthylène, le Nylon, les polyesters et le polyuréthanne.

13. Procédé selon l'une quelconque des revendications 8 à 12, dans lequel au moins l'un desdits premier et second composants de couche externe comprend une couche à faible frottement.

14. Procédé selon l'une quelconque des revendications 1 à 13, dans lequel ledit substrat comprend une mousse élastomérique thermoplastique.

15. Appareil pour revêtir un substrat, ledit appareil comprenant une matrice comprenant :
une plaque de matrice (50; 140; 440),
une plaque frontale (90) couplée à ladite plaque de matrice (50; 140; 440) de manière à y définir un canal à résine (55; 155; 455) pour maintenir une résine à l'état liquide dans une première plage de pression ;
une ouverture de matrice (70; 170; 470) dans ladite plaque de matrice et ladite plaque frontale pour y faire passer le substrat (101; 201) ;
une paroi (75) disposée entre ledit canal à résine (55; 155; 455) et ladite ouverture de matrice de manière à former un interstice de distribution mesurée (92) entre le sommet de ladite paroi (75) et ladite plaque frontale (90) pour distribuer de manière mesurée la résine liquide depuis ledit canal à résine jusqu'à ladite ouverture de matrice de manière a amener la résine liquide de la première plage de pression à une seconde plage de pression pour revêtir un substrat (101 ; 201) au niveau de l'ouverture de matrice (70; 170; 470), les pressions de la seconde plage de pression étant inférieures aux pressions de la première plage de pression.

16. Appareil selon la revendication 15, dans lequel ledit interstice de distribution mesurée (92) commande l'écoulement de résine liquide de manière à ne recouvrir que des parties prédéterminées dudit substrat (101 ; 201) et à recouvrir lesdites parties d'une épaisseur uniforme de ladite résine liquide ou d'épaisseurs variables suivant ce que l'on souhaite.

17. Appareil selon la revendication 15 ou la revendication 16 pour former une couche externe comprenant au moins un premier composant et un second composant en matériaux différents, ledit appareil comprenant une seconde matrice (350) alimentée en une seconde résine liquide, la seconde matrice (340; 350) comprenant une première région, des dispositifs pour introduire une résine à l'état liquide dans ladite première région, des dispositifs pour maintenir ladite première région dans une première plage de pression, une seconde région, des dispositifs de commande pour commander l'écoulement de la résine liquide depuis ladite première région jusque dans ladite seconde région de manière à amener la résine liquide de la première plage de pression dans une seconde plage de pression, les pressions de la seconde plage de pression étant inférieures aux pressions de la première plage de pression, et une ouverture de matrice adjacente à ladite seconde région pour appliquer ladite résine liquide à une pression située dans la seconde plage de pression au substrat (201), ladite matrice mentionnée en premier lieu appliquant ladite première résine liquide à au moins une première partie choisie dudit substrat, ladite seconde matrice appliquant ladite seconde résine liquide à au moins une seconde partie choisie dudit substrat (201).

18. Appareil selon la revendication 17, dans lequel lesdites première et seconde matrices sont agencées de telle manière que lesdites premières et lesdites secondes parties choisies se recouvrent au moins partiellement.

19. Appareil selon la revendication 15, dans lequel la plaque frontale définit des premier et second canaux à résine (455a, 455b) destinés à contenir des première et seconde résines respectives à l'état liquide, ladite paroi (475) étant disposée entre lesdits premier et second canaux à résine (455a, 455b) et ladite ouverture de matrice de manière à former un interstice de distribution mesurée entre un sommet de ladite paroi et ladite plaque frontale pour distribuer de manière mesurée l'écoulement des première et seconde résines liquides depuis lesdits premier et second canaux à résine jusqu'à ladite ouverture de matrice de manière à recouvrir un substrat dans ladite ouverture de matrice avec les première et seconde résines liquides.

HOT AIR

CORONA

ADHESIVE

20

35

40

SPRAY MIST

AIR WIPE

46

42

30

Fig.1.

EP 0 369 748 B1

Fig.2.

Fig.3.

Fig. 4.

*Fig.5.*

*Fig.6.*

*Fig.7.*

*Fig.8.*

*Fig.9.*

Fig.10.